# EUROPEAN PATENT APPLICATION

(11) **EP 4 779 191 A1**
(43) Date of publication of application: **22.07.2026**
(21) Application number: 25460004.2
(22) Date of filing: 21.01.2025
(51) Int. Cl.: F16L 55/162, F16L 55/40

(54) **HEAD BODY FOR CURING THE RESIN LINING OF A PIPELINE**

(71) Applicant: ST System Adrian StyS, 37-100 Lancut (PL)
(72) Inventor: Stys, Adrian, 37-100 Lancut (PL)

(57) **Abstract**

The body of the head for curing the resin lining of a pipeline, characterized in that it has inlet cooling channels 6 drilled non-through in the front part 7 of the elongated part 1 of the body and outlet cooling channels 8, and in the side wall 9 of the body, at the end of the non-through cooling channels 6 and 8, cross openings 10 have been drilled, connecting the portion of the body between the cooling channels 8 and 6, while at the end of the non-through cooling channels 8, on the inlet side 4, outlet openings 11 are provided.

## Description

The subject of the invention is a body used in heads for curing the internal resin lining of a pipeline, with significantly increased heat dissipation efficiency.

It is known from the European patent application EP3336404A1, a device for curing inner pipeline linings made with the use of a resin compound cured by means of electromagnetic radiation, said device being equipped with a central polyhedral body provided with LEDs generating the radiation by emitting waves with lengths from the range 200-500 nm, to cause curing of said resin compound, where said LEDs are shielded with an element made of a transparent plastic or quartz glass is characterized with that its body constitute monolithic cylindrical solids having along the whole of length of their outside surfaces with defined radii identical flat facets-chords symmetrically distributed on said surfaces, to which detachably attached are plastic plates equipped with LEDs emitting electromagnetic radiation with definite range of wavelengths, whereas between each two chords situated next to each other, provided are slit grooves radially oriented and terminated with circular or semi-circular grooves with heights ranging from 2/3 to 3/4 of lengths of radii of the bodies, and side walls of the identical figures separated this way from each other and with their shapes close to isosceles trapeziums are provided with profiled recesses with diversified lengths functioning as radiators, to which compressed air for cooling the LEDs is supplied via profiled recesses in brackets, whereas the air outlet is provided in analogous brackets, which are joined detachably with rear and front faces respectively, of the body of the device.

In turn, the application WO2018127583 A1 discloses an apparatus for curing a liner of a pipeline, said liner including a resin which is curable by exposure to electromagnetic radiation of a specific wavelength or a specific wavelength range, said apparatus comprising: a housing defining opposite first and second ends, an outer wall of a substantially cylindrical configuration, and an inner wall defining a substantially unobstructed through-going passage extending longitudinally through said housing between said first and second ends; a pair of power supply wires for the supply of electrical power to said apparatus and extending from said first end of said housing; a plurality of LED's irradiating electromagnetic radiation of said specific wavelength or said specific wavelength range, said plurality of LED's being positioned and substantially evenly distributed at said outer wall of said housing, said plurality of LED's being connected through an electronic circuit to said pair of power supply wires; said plurality of LED's being connected in thermal conductive relationship to heat dissipating elements freely exposed at said inner wall of said housing in said through-going passage of said housing for allowing a stream of cooling fluid to pass through said passage for dissipating heat from said heat dissipating elements and cooling said LED's characterized in that said housing defines an innermost wall dividing said substantially unobstructed through-going passage into an inner passage centrally located within said substantially unobstructed through-going passage and extending substantially between said first and second ends, and, an outer passage defined between said inner wall and said innermost wall and coaxially enclosing said inner passage, wherein said housing defines a centrally located inlet for receiving pressurized gas, said inlet being in fluid communication with said inner passage at said first end and wherein said housing is closed at said second end and said through-going passage defines a flow reversing chamber at said second end for establishing fluid communication between said first passage and said second passage

During the operation of the known and currently used heads, the main problem that requires a solution is ensuring adequate cooling/heat dissipation from its components, which is generated by the operation of the LED diodes located on the outer part of the body and connected to it, used to emit electromagnetic radiation of a properly selected wavelength - enabling the curing of the resin sleeve placed inside the pipeline, within which the head is located. Improving heat dissipation efficiency allows for an increased lifespan, primarily of the LED diodes located there and other components that heat up.

The cooling methods for bodies known and used so far have mainly involved the development of increasingly newer and more complex body shapes with through, longitudinal channels that increase the surface area for heat dissipation to the surroundings, or they included diodes placed on them that light up in a cyclical manner, thereby allowing cooling time between the cycles of diode operation, and also additional elements such as fans (US 7524089) or movable bodies that supported cooling through forced air circulation and additionally employed flow reversing chambers (WO2018127583A1). In alternative solutions (EP 20460028) complex channel shapes were disclosed that can only be manufactured using 3D printing.

The objective of this solution is to develop a body shape intended for placement in a head for curing a resin lining of a pipeline, which will effectively maximize its cooling by using a uniform channel shape or independent channels, free from air chambers, thus eliminating the need for more expensive manufacturing techniques such as 3D printing in aluminum, significantly reducing the cost of producing the head while maintaining a constant, laminar, and uninterrupted flow of cooling air through the body.

The essence of the body of the head for curing a resin lining of a pipeline is that it has inlet cooling channels drilled non-through in the front part of the body and outlet cooling channels, and in the side wall, at the point where the non-through cooling channels end, there are drilled transverse openings connecting the section of the body between these cooling channels. Additionally, at the end of the non-through cooling channels, on the air inlet side, there are outlet openings directing the air to the outside. It is advantageous when, between the inlet and outlet cooling channels, the body has additional auxiliary cooling channels, and the transverse openings connect the outlet and auxiliary channels, with the section of the body between the inlet and auxiliary channels, on the inlet side, being milled to create a transverse channel plugged with a ring, and when the inlet cooling channels are connected through transverse openings to a larger number of outlet channels. It is also advantageous when the outlet channels take the form of radiators in the bottom of a side recess of the side wall of the body, on which a plate with LED diodes is placed, simultaneously serving as a seal for the channel, and when the transverse openings are plugged from the outside of the body by plates with LED diodes, or when the transverse openings are plugged from the outside of the body by additional elements that do not interfere with the airflow in the channels.

The use of the body according to the invention has enabled a significant increase in the cooling efficiency of such a head, while maintaining low production costs, simultaneously allowing for the preservation of its longevity and performance, as in the case of the most expensive technologies, with a significant reduction in production costs. Additionally, the innovative shape of the head has not affected the external dimensions of the body itself, which is why the body according to the invention can be used in the heads previously used.

An additional advantage of the solution according to the invention is the possibility of retrofitting existing bodies by applying drilling to the side walls of the body and machining their front ends in the air inlet walls, while maintaining the ability to use an inlet funnel that compresses the air at the entrance to the cooling channel(s), as well as the possibility of manufacturing the head in such a way that the outlet channel(s) are placed on the side walls of the body, resulting in the air discharged from the body not interfering with the airflow of the incoming air.

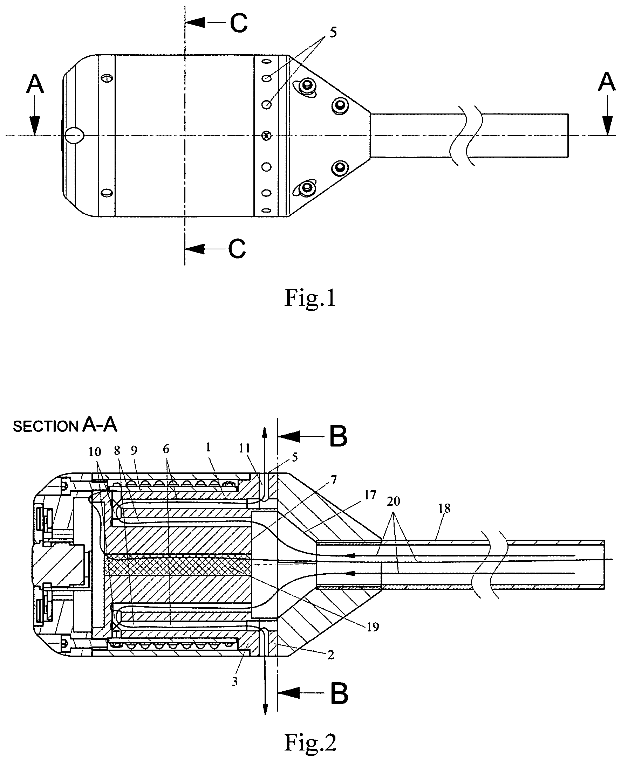

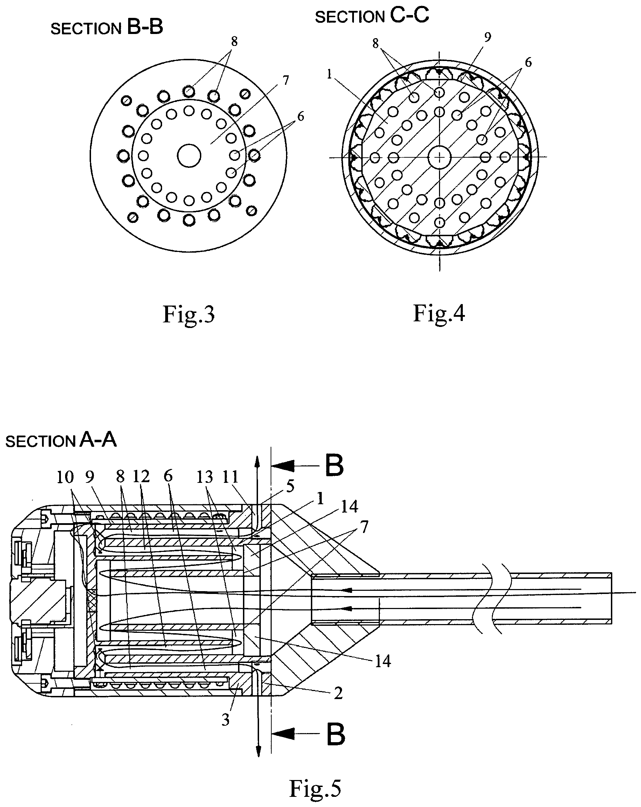

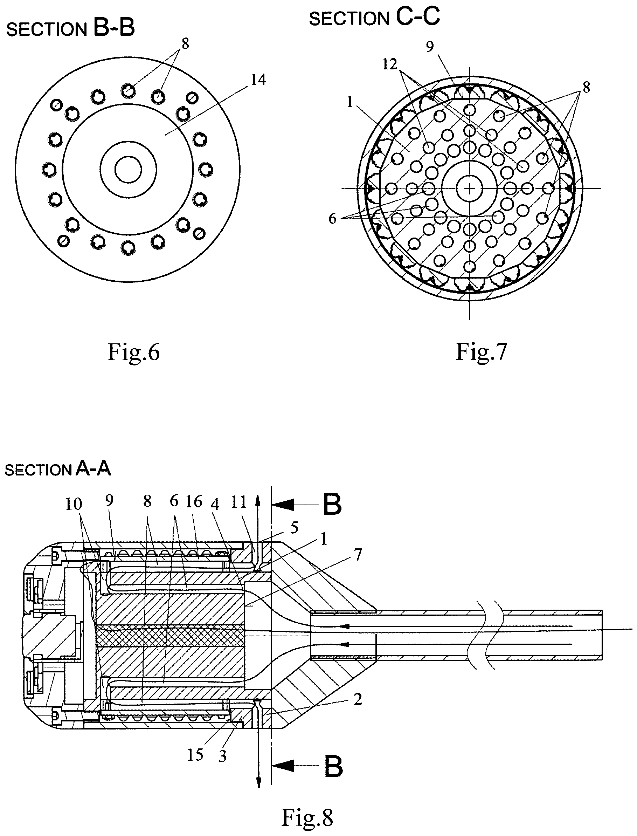

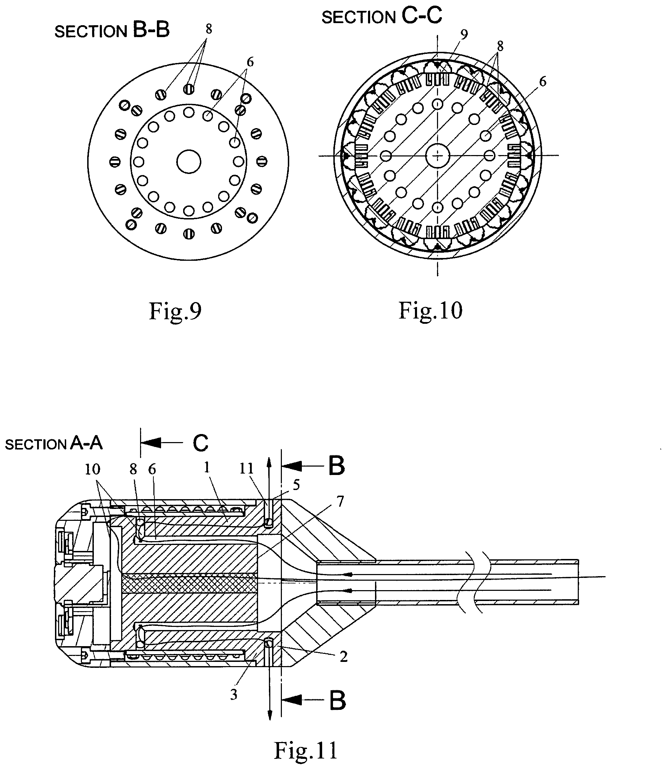

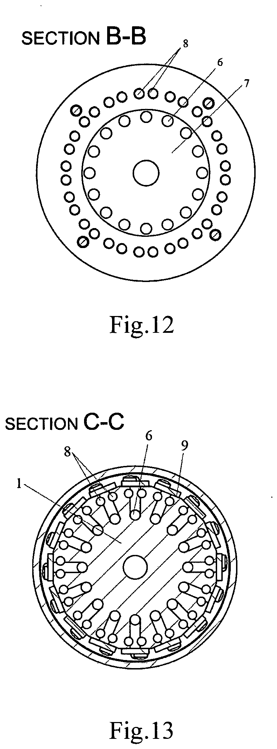

The subject of the invention is illustrated in the examples of the invention execution in Figs. 1-13, where Fig. 1 shows the head in a side view, Fig. 2 shows a cross-section of the head with the body according to the first example of execution along line A-A, Fig. 3 shows a cross-section of the head with the body according to the first example of execution along line B-B, Fig. 4 shows a cross-section of the head with the body according to the first example of execution along line C-C, Fig. 5 shows a cross-section of the head with the body according to the second example of execution along line A-A, Fig. 6 shows a cross-section of the head with the body according to the second example of execution along line B-B, Fig. 7 shows a cross-section of the head with the body according to the second example of execution along line C-C, Fig. 8 shows a cross-section of the head with the body according to the third example of execution along line A-A, Fig. 9 shows a cross-section of the head with the body according to the third example of execution along line B-B, Fig. 10 shows a cross-section of the head with the body according to the third example of execution along
line C-C, Fig. 11 shows a cross-section of the head with the body according to the fourth example of execution along line A-A, Fig. 12 shows a cross-section of the head with the body according to the fourth example of execution along line B-B, and Fig. 13 shows a cross-section of the head with the body according to the fourth example of execution along line C-C.

### EXAMPLE 1

The body according to the first example of its execution consists of an elongated part 1 in the shape of a prism with a regular polygonal base, which at one end has known annular mounting recesses 2, while at the other end there is an annular recess 3 with an inlet opening 4 and an outlet opening 5 for the inlet cooling channels 6 with a circular cross-sectional profile, drilled non-through and symmetrically with respect to the axis of the body in the front part 7 of the elongated part 1 of the body. Parallel to the cooling channels 6, outlet cooling channels 8 have been drilled, positioned along the radii, so that each of the inlet cooling channels 6 and each of the outlet cooling channels 8 form a pair placed in a straight line relative to the axis of the body. Additionally, in the side wall 9 of the body, at the end of the non-through cooling channels 6 and 8, cross openings 10 have been drilled, the depth of which allows for drilling through and connecting the portion of the body between these cooling channels, thus joining them, while in the side wall 9 of the body, at the end of the non-through cooling channels 8, on the inlet side 4, outlet openings 11 have been drilled

### EXAMPLE 2

The body according to the second variant of execution has a construction analogous to the body described in the first example, with the difference that additional auxiliary cooling channels 12 have been drilled between the cooling channels 6 and 8, while the cross openings 10 have been drilled to a depth that connects only channels 8 and 12, and the portion of the body between channels 8 and 12, on the inlet opening side 4, has been additionally milled to create a transverse channel 13, which has been plugged with an additional ring 14.

### EXAMPLE 3

The body according to the third variant of execution has a construction analogous to the body described in the first example, with the difference that the outlet channels 8 are in the form of radiators - three narrow rectangular cross-section channels, drilled into the side recess 15 of the side wall of the body, in which a plate 16 with LEDs is placed, serving simultaneously as a seal for this channel.

All the examples of execution described above have channels with the same, unchanging cross-sectional profile along their entire length. It is obvious that the channels described in examples 1-5 can be replaced with channels of any profiles that can be manufactured using known metalworking methods.

### EXAMPLE 4

The body according to the third variant of execution has a construction analogous to the body described in the first example, with the difference that each of the outlet cooling channels 8, positioned parallel to the cooling channels 6, has been replaced by a pair of two outlet cooling channels 8. At the end of the non-through cooling channels 6 and each pair of outlet cooling channels 8, cross openings 10 have been drilled, the depth of which allows for drilling through and connecting the portion of the body between these cooling channels. Optionally, it is possible to connect the cooling channel 6 with each of the channels forming the pair of outlet cooling channels 8 through a separate cross opening 10.

In further examples, the sets and configurations of cooling channels 6 had varying numbers of channels selected depending on the needs and external dimensions of the body, while the air inlet openings 4 to the channels 6 were placed in a conical recess 17 formed on the front surface of the body on the side of the inlet openings 4, intensifying the force/speed of the air stream entering the channels 6.

All the cross openings 10 described in the examples of the invention execution are plugged from the outside of the body with plates containing LEDs, which are located on the outer wall of the body, or they have been plugged with additional elements, not shown in the drawings, to a depth that allows air to flow through the channels 6, 8, and 10 without disturbing the airflow

The body according to the invention is used in known and previously applied heads for curing the resin lining of pipelines, where compressed air or other cooling medium is supplied through hose 18 to the front surface of the body of the head, from where, through the recess and the inlet openings 4, it enters the cooling channel(s) 6, flowing uninterrupted through the entire body, then reversing direction and exiting the head through the cross openings 10, and optional auxiliary channels 12, outlet cooling channels 8, and outlet openings 11. Depending on the needs, the body according to the invention may additionally have a centrally located opening 19 for the power supply cables 20, providing power to the LEDs or other components of the head.

## Claims

1. The body of the head for curing the resin lining of a pipeline, **characterized in that** it has inlet cooling channels (6) drilled non-through in the front part (7) of the elongated part (1) of the body and outlet cooling channels (8), and in the side wall (9) of the body, at the end of the non-through cooling channels (6) and (8), cross openings (10) have been drilled, connecting the portion of the body between the cooling channels (8) and (6), while at the end of the non-through cooling channels (8), on the inlet side (4), outlet openings (11) are provided.

2. The body of the head according to claim 1, **characterized in that** between the cooling channels (6 and 8), there are additional auxiliary cooling channels (12), while the cross openings (10) drilled connect channels (8) and (12), and the portion of the body between channels (8) and (12), on the inlet opening side (4), has been milled to create a transverse channel (13), plugged with a ring (14).

3. The body of the head according to claims 1 or 2, **characterized in that** the outlet channels (8) are in the form of radiators in the bottom of the side recess (15) of the side wall of the body, on which a plate (16) with LEDs is placed, simultaneously serving as a seal for this channel.

4. The body of the head according to claim 1, **characterized in that** the inlet cooling channels (6) are connected through cross openings (10) to a greater number of outlet channels (8).

5. The body of the head according to any of claims 1-4, **characterized in that** the cross openings (10) are plugged from the outside of the body with plates containing LEDs.

6. The body of the head according to any of claims 1-4, **characterized in that** the cross openings (10) are plugged from the outside of the body with additional elements that do not disrupt the airflow in the channels.
